# EUROPÄISCHE PATENTSCHRIFT

(11) **EP 2 950 175 B1**
(45) Veröffentlichungstag und Bekanntmachung des Hinweises auf die Patenterteilung: **31.03.2021**
(21) Anmeldenummer: 14169948.8
(22) Anmeldetag: 27.05.2014
(51) Int. Cl.: G05B 23/02

(54) **Verfahren und Vorrichtung zum Testen eines Steuergerätes**
Process and apparatus for the test of a control device
Procédé et dispositif pour tester un appareil de commande

(43) Veröffentlichungstag der Anmeldung: 02.12.2015
(73) Patentinhaber: dSPACE digital signal processing and control engineering GmbH, 33102 Paderborn (DE)
(72) Erfinder: Scharfe, Carsten, 33102 Paderborn (DE); Püschl, Thorsten, 33102 Paderborn (DE)

(56) Entgegenhaltungen:
- EP-A1- 1 806 636
- WO-A1-2011/023203
- WO-A1-2011/023204
- US-A1- 2012 210 385

## Beschreibung

Die Erfindung betrifft ein Verfahren zum Testen eines Steuergerätes, bei dem an ein reelles oder simuliertes Steuergerät über eine Netzwerkverbindung Sensordaten übertragen werden, welche mittels einer Datenverarbeitungsanlage durch Simulation berechnet werden.

Die Erfindung betrifft weiterhin auch einen Sensordatensimulator zur Simulation von Daten eines Sensors für den Test von Steuergeräten, welche die simulierten Daten verarbeiten, umfassend eine Datenverarbeitungsanlage mit wenigstens einer Grafikprozessoreinheit.

Verfahren und Vorrichtungen dieser Art sind im Stand der Technik besonders im Bereich der Automobilzulieferer bekannt. Bekannt sind solche Verfahren unter der Bezeichnung HIL - Hardware in the Loop oder SIL -Software in the Loop. Hierbei werden entweder konkrete technische Steuergeräte oder simulierte Steuergeräte dadurch getestet, dass ihnen simulierte Sensordaten über eine Netzwerkverbindung zugespielt werden in der Art als wären die Steuergeräte in ein konkretes KFZ verbaut und würden von Sensoren erfasste Umweltdaten oder sonstige Messdaten, insbesondere in Echtzeit erfassen. So können auf diese Weise Steuergeräte hinsichtlich ihrer Funktion getestet werden, ohne konkrete Messfahrten durchführen zu müssen, was insbesondere im Vorserienstadium vorteilhaft ist. Als ein simuliertes Steuergerät wird zum Beispiel ein Computer verstanden, der sich aufgrund einer darauf ablaufenden Software technisch wie ein konkretes Steuergerät verhält.

EP1806636A1 offenbart ein Hil-System zum Testen von Steuergeräten eines Fahrzeugsteuersystems mit einer echtzeitfähigen Simulationseinrichtung zur Ausführung einer Systemsimulation.

US2012210385A1 offenbart eine Vorrichtung zur Übertragung von Multimediasignalen über lange Distanzen.

Im Stand der Technik ist es auf anderen Gebieten auch bekannt, anlageninterne rechenintensive Aufgaben nicht nur von dem Hauptprozessor einer Datenverarbeitungsanlage durchführen zu lassen, sondern dafür die Rechenkapazitäten eines Grafikprozessors einer Grafikprozessoreinheit der Datenverarbeitungsanlage zu nutzen, da diese Prozessoren sehr leistungsstark sind und teilweise auch in einer Parallelarchitektur vorliegen und durch ihre Visulisierungsaufgaben nicht vollständig ausgelastet sind, somit also eine ergänzend oder auch vollständig nutzbare Hardware-Ressource für Rechenaufgaben darstellen.

Dabei werden die von Grafikprozessoren berechneten Daten nach deren Berechnung aus dem Speicher einer Grafikprozessoreinheit übertragen in den Hauptspeicher der Datenverarbeitungsanlage, um diese sodann lediglich dort weiter zu verarbeiten.

Im Bereich der Test von Steuergeräten durch simulierte Umwelt- und / oder Sensordaten sind hingehen die Grafikprozessoren der Datenverarbeitungsanlagen zu Simulationszwecken bislang nicht genutzt worden, da keine genügend schnellen Übertragungswege zur Verfügung standen, um die berechneten Daten den zu testenden Steuergeräten aus einer Grafikprozessoreinheit zur Verfügung zu stellen. Die Übertragung der berechneten Daten aus der Grafikprozessoreinheit zunächst in den Hauptspeicher der Datenverarbeitungsanlage zum Zweck der Weiterleitung über Netzwerkverbindungen kompensiert bislang jeglichen Geschwindigkeitsvorteil bei der Berechnung.

Es ist demnach die Aufgabe der Erfindung, ein Verfahren und Vorrichtungen bereit zu stellen, mit denen unter Ausnutzung von wenigstens einem Grafikprozessor wenigstens einer Grafikprozessoreinheit Tests für Steuergeräte ermöglicht werden. Insbesondere sollen hierdurch auch neue rechenintensivere Simulationsanwendungen erschlossen werden.

Diese Aufgabe wird mit einer erfindungsgemäßen Weiterbildung des bekannten gattungsgemäßen Verfahrens gelöst, bei der die Simulation der Sensordaten zumindest teilweise mit wenigstens einem Grafikprozessor wenigstens einer Grafikprozessoreinheit der Datenverarbeitungsanlage erfolgt und die simulierten Sensordaten in Bilddaten kodiert werden, welche über eine Visualisierungsschnittstelle ausgegeben werden an eine Datenwandlereinheit und mittels der Datenwandlereinheit die empfangenen Bilddaten umgewandelt werden in die Sensordaten enthaltende Paketdaten, die paketbasiert, insbesondere gemäß dem TCP/IP-Protokoll von der Datenwandlereinheit über die Netzwerkverbindung an das Steuergerät übertragen werden. Die Kodierung der simulierten Sensordaten in auszugebende Bilddaten kann dabei bevorzugt direkt von der wenigstens eine Grafikprozessoreinheit, insbesondere von wenigstens einem Grafikprozessor einer solchen Einheit erfolgen.

Es ist somit ein wesentlicher Kerngedanke der Erfindung zum einen den Geschwindigkeitsvorteil wenigstens einer Grafikprozessoreinheit bei der Simulation von Sensordaten auszunutzen, diese also in der wenigstens einen Grafikprozessoreinheit durch wenigstens einen Grafikprozessor, ggfs. mehrere parallel arbeitende Grafikprozessoren zu berechnen und diese Sensordaten erfindungsgemäß nun direkt über eine Standardschnittstelle für die Visualisierung zur Außenwelt zugänglich zu machen für zu testende Steuergeräte.

Dafür sieht die Erfindung vor, dass mit einer Datenwandlereinheit die über die Visualisierungsschnittstelle ausgegebenen Bilddaten, welche die Sensordaten kodiert enthalten, umgewandelt werden in Netzwerkdaten, also die Simulationsdaten enthaltende Netzwerk-Datenpakte, die von dem Steuergerät über dessen wenigstens einen Dateneingang empfangbar sind. Zur Übertragung über die Netzwerkverbindung kann z.B. das TCP/IP-Protokoll, das UDP/IP-Protokoll oder auch jedes andere geeignete Protokoll verwendet werden..

Die Erfindung kann dabei bevorzugt vorsehen, dass die zur Ausgabe der simulierten Sensordaten verwendete Visualisierungsschnittstelle baulich-integraler Bestandteil der wenigstens einen Grafikprozessoreinheit ist, welche die Sensordaten simuliert. Der Übertragung an das Steuergerät vorgelagerte interne Übertragungswege werden somit umgangen und die Simulationsdaten direkt zugänglich.

Bei Einsatz ggfs. mehrerer Grafikprozessoreinheiten in der Datenverarbeitungsanlage benötigt hingegen nicht jede der Grafikprozessoreinheiten eine eigene Visualisierungsschnittstelle. Wird die Simulation nur auf einer Grafikprozessoreinheit oder nur mit einem Grafikprozessor durchgeführt, so ist es vorteilhaft, wenn zumindest genau diese die Simulation durchführende Grafikprozessoreinheit eine eigene Visualisierungsschnittstelle aufweist, bevorzugt als physikalisch zugeordnete Hardware-Komponente in baulicher Integration.

Wenn hingegen mehrere Grafikprozessoreinheiten zur Simulation eingesetzt werden, kann die Erfindung auch vorsehen, dass die Ausgabe der Bilddaten, in welche die Sensordaten kodiert sind, nur über eine Visualisierungsschnittstelle erfolgt, die nur einer der mehreren Grafikprozessoreinheiten zugeordnet ist, insbesondere als baulich-integrale Hardware-Komponente.

Hier kann die Erfindung weiterhin vorsehen, dass zur Ausgabe der Bilddaten diejenige Visualisierungsschnittstelle derjenigen Grafikprozessoreinheit verwendet wird, welche die höchste Rechenlast von allen zur Simulation verwendeten Grafikprozessoreinheiten hat. Diese Grafikprozessoreinheit kann bevorzugt auch zur Kodierung der Sensordaten in Bilddaten eingesetzt werden. Die übrigen bei der Simulation verwendeten Grafikprozessoreinheiten mit geringerer Rechenlast können ihre dort berechneten Simulationsdaten z.B. über interne Übertragungswege an die ausgebende Grafikprozessoreinheit übertragen. So werden evtl. benötigte Übertragungswege bei einer Parallelverarbeitung auf geringe Datenmengen beschränkt.

Sofern die übrigen zur Simulation verwendeten Grafikprozessoreinheiten eigene Visualisierungsschnittstellen haben, kann die Erfindung vorsehen, dass diese zur erfindungsgemäßen Simulations-Datenausgabe nicht verwendet werden. Hingegen können diese Visualisierungsschnittstellen für sonstige übliche Visualisierungen benutzt werden, z.B. zur Monitor-Ausgabe.

Erfindungsgemäß kann es vorgesehen sein, dass die Datenwandlereinheit eine an der Visualisierungsschnittstelle angeschlossene Visualisierungseinheit simuliert, wobei diese Simulation insbesondere der Grafikprozessoreinheit gegenüber erfolgt, welcher die ausgebende Visualisierungsschnittstelle zugeordnet ist, insbesondere deren baulicher Bestandteil die Visualisierungsschnittstelle ist, also sich in dieser bevorzugten Ausführung die Datenwandlereinheit sich der Grafikprozessoreinheit gegenüber technisch z.B. also Monitor ausgibt, um eine Ausgabe der Daten zu veranlassen.

Eine solche Ausbildung kann insbesondere dann vorteilhaft sein, wenn die zur Simulation verwendete wenigstens eine Grafikprozessoreinheit selbst ihre wenigstens eine zumindest logisch, ggfs. und bevorzugt auch physikalisch zugeordnete Visualisierungsschnittstelle nach angeschlossenen kompatiblen Visualisierungsgeräten überprüft und die Schnittstelle bzw. Kodierung von Bilddaten an eine erkannte Visulisierungseinheit anpasst, z.B. hinsichtlich Bildauflösung und/oder Bildwechselfrequenz.

Da in üblicher Visualisierungsbetriebsweise mit einer Bildwechselfrequenz von 50 oder 60 Hz die Übertragungsrate stark beschränkt wäre kann es hier die Erfindung vorsehen, dass die Kodierung und Ausgabe der Bilddaten mit darin kodierten Sensordaten mit Bildwechselfrequenzen oberhalb dieser üblichen Standard - Bildwechselfrequenzen erfolgt, die nach geltenden Normen wie z.B. PAL oder NTSC verwendet werden. Beispielsweise können Bildwechselfrequenzen über 500 Hz, bevorzugt über 1000 Hz gewählt werden.

Die Erfindung kann eine solche technisch stark überhöhte Bildwechselfrequenz vorsehen, da eine tatsächliche Visualisierung der die simulierten Sensordaten enthaltenden Bilddaten nicht erfolgt, zumindest nicht über die erfindungsgemäß zweckentfremdete Visualisierungsschnittstelle und die Überhöhung der Bildwechselfrequenz nur zu Steigerung der Datenübertragungsrate dient.

Insofern kann es hier vorteilhaft sein, wenn die Datenwandlereinheit insbesondere der Grafikprozessoreinheit eine angeschlossene Visualisierungseinheit simuliert, welche die Eignung hat, Bilddaten mit dieser Bildwechselfrequenz visualisieren zu können, insbesondere ohne dass dies tatsächlich der Fall ist. Die Visualisierungsschnittstelle der wenigstens einen Grafikprozessoreinheit wird somit im Rahmen der Erfindung zweckentfremdet.

Ein Sensordatensimulator als erfindungsgemäße Vorrichtung weist eine an eine Visualisierungsschnittstelle (insbesondere die zumindest logisch, bevorzugt auch physikalisch wenigstens einer Grafikprozessoreinheit zugeordnet ist) insbesondere an einen VGA, DVI- oder HDMI-Port angeschlossene Datenwandlereinheit auf, wobei die Datenverarbeitungsanlage, insbesondere deren wenigstens eine Grafikprozessoreinheit eingerichtet ist, simulierte Sensordaten in Bilddaten zu kodieren und über die Visualisierungsschnittstelle an die Datenwandlereinheit auszugeben, mit der die empfangenen Daten in Simulationsdaten enthaltende Datenpakete wandelbar sind, die an einer Netzwerkschnittstelle, insbesondere nach dem TCP/IP-Standard ausgebbar sind.

Eine entsprechend ebenso erfindungsgemäße Vorrichtung wird demnach gebildet durch eine Datenwandlereinheit umfassend eine Empfangsschnittstelle zum Anschluß an eine einer Grafikprozessoreinheit zugeordnete, insbesondere zumindest logisch, bevorzugt auch physikalisch zugeordnete Visualisierungsschnittstelle einer Datenverarbeitungsanlage und eine Sendeschnittstelle zur Ausgabe von Datenpaketen eines paketbasierten Netzwerk-Protokolls, wobei die Datenwandlereinheit eingerichtet ist, in Bilddaten kodierte Nutzdaten, die über die Empfangsschnittstelle empfangbar sind, umzuwandeln in die Nutzdaten enthaltende Netzwerk-Datenpakete, die über die Sendeschnittstelle versendbar sind.

Hier kann die Datenwandlereinheit auch weiterhin eingerichtet sein, Betriebsparameter, wie z.B. die zu verwendende Bildwechselfrequenz intern gespeichert vorzuhalten und bei Anschluß an eine Visualisierungsschnittstelle der Datenverarbeitungsanlage, welche die Simulation vornimmt, zu übertragen, damit sich diese, insbesondere deren wenigstens eine Grafikprozessoreinheit entsprechend konfiguriert.

Vorteilhaft ist es bei der Anwendung der Erfindung auch weiterhin, dass hierdurch besonders rechenintensive Echtzeitanwendung in der Simulation erschlossen werden. Z.B. kann es vorgesehen sein, mit der Datenverarbeitungsanlage bzw. deren wenigstens eine Grafikprozessoreinheit die Sensordaten eines LIDAR (Light Detection and Range)-Sensors zu simulieren, die in der automobilen Anwendung z.B. bei autonom lenkenden Fahrzeugen zum Einsatz kommen. Wenngleich die Erfindung bevorzugt bei dieser Anwendung zum Einsatz kommen kann, ist sie nicht hierauf beschränkt.

Hier kann es die Erfindung vorsehen, dass durch die Datenverarbeitungsanlage, insbesondere deren wenigstens eine Grafikprozessoreinheit sowohl eine 3D-Szene einer Umweltumgebung simuliert wird, also auch die Messwertaufnahme dieser Szene durch einen in der Szene positionierten ebenfalls simulierten LIDAR-Sensor, z.B. der durch ein KFZ in der simulierten Szene bewegt wird. Steuergeräte für LIDAR-Sensoren können so getestet werden, ohne konkrete Messfahrten durchführen zu müssen und auch ohne tatsächliche Existenz des LIDAR-Sensors.

Die Simulation der Sensordaten kann z.B. mittels sogenannter Shader erfolgen, die in Software realisiert sein können, insbesondere auf der wenigstens eine Grafikprozessoreinheit, insbesondere die von wenigstens einem Grafikprozessor der Grafikprozessoreinheit ausgeführt werden.

Es besteht auch die Möglichkeit die Funktionalität eines Shaders in einer Hardwareschaltung zu implementieren, z.B. als anwendungsspezifische integrierte Schaltung (ASIC).

Unter eine Grafikprozessoreinheit wird im Sinne der Erfindung eine Einheit verstanden, die sowohl ein integraler Bestandteil einer Datenverarbeitungsanlage, insbesondere von deren Hauptplatine sein kann, aber die auch alternativ als eine separate aus der Datenverarbeitungsanlage entfernbare Einheit ausgebildet sein kann, insbesondere als Steckkarte, wobei eine Grafikprozessoreinheit jeweils wenigstens einen Grafikprozessor und bevorzugt wenigstens einen eigenen Grafikspeicher aufweist. Zumindest logisch kann der Grafikprozessoreinheit auch wenigstens eine Visualisierungsschnittstelle zugeordnet sein, die zur Ausgabe von Bilddaten an eine Visualisierungseinheit, z.B. einen Monitor dienen kann. Bevorzugt ist eine Visualisierungsschnittstelle einer Grafikprozessoreinheit auch direkt physikalisch der Grafikprozessoreinheit zugeordnet, also integraler Hardware-Bestandteil einer solchen Einheit. Sodann werden zumindest bei einer solchen Grafikprozessoreinheit keine weiteren Datenübertragungswege für die simulierten Sensordaten innerhalb der Datenverarbeitungsanlage aber außerhalb der Grafikprozessoreinheit benötigt.

In die über die Visualisierungsschnittstelle auszugebenden Bilddaten können sodann in dieser Anwendung die Sensordaten eines LIDAR-Sensors kodiert werden, also z.B. die Entfernungswerte und Reflektions- bzw. Helligkeitswerte sowie ggfs. Winkelpositionen. Beispielsweise können an die Position der sonst in Bilddaten üblicherweise vorhandenen Farbwerte die Entfernungswerte des simulierten LIDAR-Sensors kodiert werden.

Die Umwandlung der in den empfangenen Bilddaten kodierten Sensordaten mittels der Datenwandlereinheit kann z.B. Software-basiert erfolgen, in einer bevorzugten Ausführung jedoch durch einen integrierten Schaltkreis, der an die Visualisierungsschnittstelle, insbesondere an einen DVI- oder HDMI-Port angeschlossen wird, wobei in dem Schaltkreis eine logische Schaltung programmiert ist. Ein solcher Schaltkreis kann als FPGA ausgebildet sein.

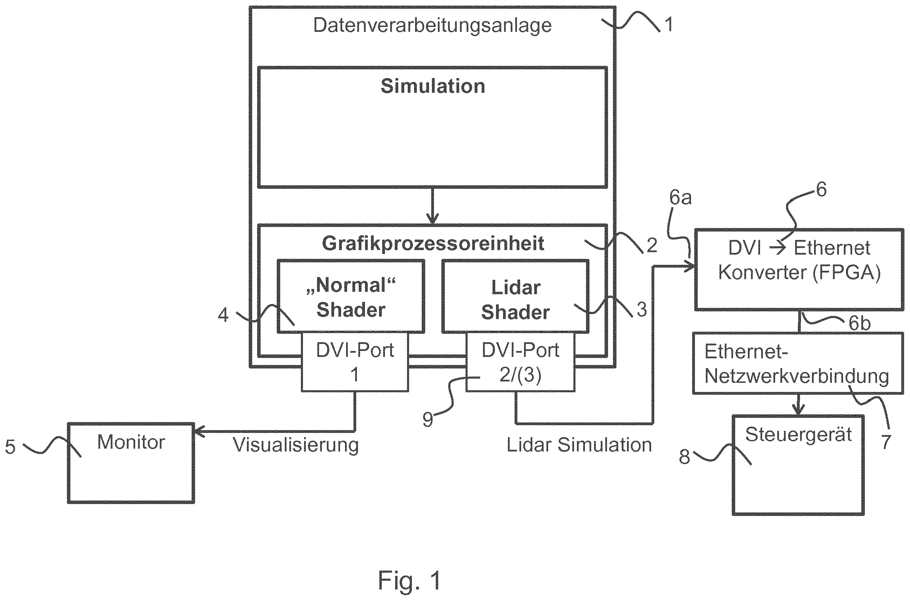

Ein Ausführungsbeispiel der Erfindung in der Anwendung für LIDAR-Sensoren wird nachfolgend anhand der Figur 1 beschrieben.

Diese Figur 1 zeigt symbolisiert eine Datenverarbeitungsanlage 1 auf welcher eine 3D-Umweltszene, hier eines fahrenden PKW simuliert wird. Ebenfalls simuliert wird ein von dem PKW mitgeführter LIDAR-Sensor der in der Simulation messtechnisch die Umwelt um den PKW herum erfasst. Die Simulationsberechnung der Messwerte des LIDAR-Sensors erfolgt auf der Basis der simulierten Umweltdaten mit wenigstens einem Grafikprozessor einer Grafikprozessoreinheit 2 der Datenverarbeitungsanlage 1. Es versteht sich, dass die Simulation der 3D-Umweltszene auch auf einer anderen Datenverarbeitungsanlage berechnet werden kann als die Simulation des LIDAR-Sensors. Umweltdaten und Sensordaten können auch beide mit der Grafikprozessoreinheit 2 berechnet/simuliert werden. Diese Grafikprozessoreinheit 2 kann bei der Simulation zumindest der Sensordaten einen Shader 3 verwenden, der nur eingesetzt ist, um die simulierten Sensordaten des LIDAR in Bilddaten zu kodieren und über eine Visualisierungsschnittstelle 9, z.B. einen DVI-Port auszugeben, z.B. mit gegenüber PAL oder NTSC-Normung überhöhter Bildwechselfrequenz von z.B. 1000 Hz. Parallel kann in der Grafikprozessoreinheit 2 ein weiterer Shader 4 betrieben werden, um eine normale Visualisierung der simulierten Szene z.B. auf einem Monitor 5 vorzunehmen.

Erfindungswesentlich ist es hier, dass ein Datenwandler 6 zum Einsatz kommt, der hier beispielsweise als FPGA realisiert ist, der die Bilddaten über seine Empfangsschnittstelle 6a empfängt und mit dem die als Bilddaten empfangenen Sensordaten umgewandelt werden in die Sensordaten enthaltende Netzwerkpakete, z.B. für eine Ethernet-Netzwerkverbindung 7, über welche das zu testende Steuergerät 8 eines LIDAR-Sensors diese simulierten Daten über die Sendeschnittstelle 6b zugesendet bekommt.

Durch die Ausgabe der simulierten Sensordaten direkt aus der Grafikprozessoreinheit 2 über deren zweckentfremdete Standard-Visualisierungsschnittstelle 9 werden interne Übertragungswege in der Datenverarbeitungsanlage 1 vermieden, so dass auch rechenintensive Echtzeitanwendungen, wie hier die Simulation von LIDAR-Sensordaten durch die Erfindung erschlossen werden.

## Patentansprüche

1. Verfahren zum Testen eines Steuergerätes (8), bei dem an ein reelles oder simuliertes Steuergerät (8) über eine Netzwerkverbindung (7) Sensordaten übertragen werden, welche mittels einer Datenverarbeitungsanlage (1) durch Simulation berechnet werden, **dadurch gekennzeichnet, dass** die Simulation der Sensordaten zumindest teilweise mit wenigstens einem Grafikprozessor wenigstens einer Grafikprozessoreinheit (2) der Datenverarbeitungsanlage (1) erfolgt und die simulierten Sensordaten in Bilddaten kodiert werden, welche über eine Visualisierungsschnittstelle (9) ausgegeben werden an eine Datenwandlereinheit (6), insbesondere, die eine an der Visualisierungsschnittstelle (9) angeschlossene Visualisierungseinheit simuliert und mittels der Datenwandlereinheit (6) die empfangenen Bilddaten umgewandelt werden in die Sensordaten enthaltende Paketdaten, die paketbasiert, insbesondere gemäß dem TCP/IP- oder UDP/IP-Protokoll über die Netzwerkverbindung (7) an das Steuergerät (8) übertragen werden.

2. Verfahren nach Anspruch 1, **dadurch gekennzeichnet, dass** die Kodierung der Sensordaten in Bilddaten mit einer Bildwechselfrequenz größer als 500 Hz, bevorzugt größer als 1000 Hz erfolgt, insbesondere wobei die Datenwandlereinheit (6) eine Visualisierungseinheit simuliert, welche die Eignung hat Bilddaten mit dieser Bildwechselfrequenz visualisieren zu können.

3. Verfahren nach einem der vorherigen Ansprüche, **dadurch gekennzeichnet, dass** mit der Datenverarbeitungsanlage (1), insbesondere mittels eines in Software realisierten Shaders Sensordaten eines LIDAR-Sensors simuliert werden auf der Grundlage einer ebenfalls von dieser (1) oder eine anderen Datenverarbeitungsanlage simulierten 3D-Umgebungsszene.

4. Verfahren nach einem der vorherigen Ansprüche, **dadurch gekennzeichnet, dass** in die Bilddaten, insbesondere anstelle von Farbwerten die Entfernungswerte eines simulierten LIDAR-Sensors kodiert werden.

5. Verfahren nach einem der vorherigen Ansprüche, **dadurch gekennzeichnet, dass** als Datenwandler-Einheit (6) ein integrierter Schaltkreis an die Visualisierungsschnittstelle (9), insbesondere an einen DVI- oder HDMI-Port angeschlossen wird, wobei in dem Schaltkreis eine logische Schaltung programmiert ist, insbesondere der Schaltkreis als FPGA ausgebildet ist.

6. Sensordatensimulator zur Simulation von Daten eines Sensors für den Test von Steuergeräten (8), welche die simulierten Daten verarbeiten, umfassend eine Datenverarbeitungsanlage (1) mit wenigstens einer Grafikprozessoreinheit (2), **dadurch gekennzeichnet, dass** die Datenverarbeitungsanlage (1) eingerichtet ist, wenigstens einen Teil der zu simulierenden Daten mit wenigstens einem Grafikprozessor wenigstens einer Grafikprozessoreinheit zu berechnen, an eine Visualisierungsschnittstelle (9), insbesondere an einen DVI- oder HDMI-Port eine Datenwandlereinheit (6) angeschlossen ist, wobei die Datenverarbeitungsanlage (1) eingerichtet ist, simulierte Sensordaten in Bilddaten zu kodieren und über die Visualisierungsschnittstelle (9) an die Datenwandlereinheit (6) auszugeben, mit der die empfangenen Daten in Simulationsdaten enthaltende Datenpakete wandelbar sind, die an einer Netzwerkschnittstelle (6b), insbesondere nach dem TCP/IP-Standard ausgebbar sind.

## Claims

1. Method for testing a control device (8), in which sensor data are transmitted to a real or simulated control device (8) via a network connection (7), which sensor data are calculated by simulation by means of a data processing system (1), **characterised in that** the simulation of the sensor data is carried out at least partially with at least one graphics processor of at least one graphics processor unit (2) of the data processing system (1) and the simulated sensor data are coded in image data, which are output via a visualization interface (9) to a data converter unit (6), in particular, which simulates a visualization unit connected to the visualization interface (9) and by means of the data converter unit (6) the received image data are converted into the packet data containing the sensor data, which are transmitted packet-based, in particular according to the TCP/IP or UDP/IP protocol via the network connection (7) to the control device (8).

2. Method according to claim 1, **characterized in that** the coding of the sensor data is carried out in image data with a frame rate greater than 500 Hz, preferably greater than 1000 Hz, in particular wherein the data converter unit (6) simulates a visualization unit which is suitable for visualizing image data with this frame rate.

3. Method according to one of the previous claims, **characterised in that** sensor data of a LIDAR sensor are simulated with the data processing system (1), in particular by means of a shader realised in software, on the basis of a 3D environment scene also simulated by this (1) or another data processing system.

4. Method according to one of the previous claims, **characterized in that** the distance values of a simulated LIDAR sensor are coded into the image data, in particular instead of colour values.

5. Method according to one of the previous claims, **characterized in that** an integrated circuit is connected as data converter unit (6) to the visualization interface (9), in particular to a DVI or HDMI port, a logic circuit being programmed in the circuit, in particular the circuit being designed as FPGA.

6. Sensor data simulator for simulating data from a sensor for testing control units (8) which process the simulated data, comprising a data processing system (1) with at least one graphics processor unit (2), **characterised in that** the data processing system (1) is arranged to calculate at least part of the data to be simulated with at least one graphics processor of at least one graphics processor unit, to a visualisation interface (9), in particular, a data conversion unit (6) is connected to a DVI or HDMI port, the data processing system (1) being set up to encode simulated sensor data into image data and to output them via the visualization interface (9) to the data conversion unit (6), with which the received data can be converted into data packets containing simulation data which can be output at a network interface (6b), in particular according to the TCP/IP standard.

## Revendications

1. Procédé pour tester un appareil de commande (8), dans lequel des données de capteur sont transmises à un appareil de commande (8) réel ou simulé par l'intermédiaire d'une connexion réseau (7), lesquelles données de capteur sont calculées par simulation au moyen d'un système de traitement de données (1), **caractérisé en ce que** la simulation des données de capteur est réalisée au moins partiellement avec au moins un processeur graphique d'au moins une unité de traitement graphique (2) du système de traitement de données (1) et les données de capteur simulées sont codées en données d'image, qui sont délivrés via une interface de visualisation (9) à une unité de conversion de données (6), en particulier, qui simule une unité de visualisation connectée à l'interface de visualisation (9) et au moyen de l'unité de conversion de données (6), les données d'image reçues sont converties en données par paquets contenant les données du capteur, qui sont transmises par paquets, en particulier selon le protocole TCP/IP ou UDP/IP via la connexion réseau (7) à l'appareil de commande (8).

2. Procédé selon la revendication 1, **caractérisé en ce que** le codage des données du capteur est effectué dans des données d'image avec une fréquence d'image supérieure à 500 Hz, de préférence supérieure à 1000 Hz, en particulier dans lequel l'unité de conversion de données (6) simule une unité de visualisation qui est appropriée pour visualiser des données d'image avec cette fréquence d'image.

3. Procédé selon l'une des revendications précédentes, **caractérisé en ce que** les données d'un capteur LIDAR sont simulées avec le système de traitement de données (1), en particulier au moyen d'un shader réalisé dans un logiciel, sur la base d'une scène d'environnement 3D également simulée par ce (1) ou un autre système de traitement de données.

4. Procédé selon l'une des revendications précédentes, **caractérisé en ce que** les valeurs de distance d'un capteur LIDAR simulé sont codées dans les données d'image, en particulier au lieu des valeurs de couleur.

5. Procédé selon l'une des revendications précédentes, **caractérisé en ce qu'**un circuit intégré est connecté comme unité de conversion de données (6) à l'interface de visualisation (9), en particulier à un port DVI ou HDMI, un circuit logique étant programmé dans le circuit, en particulier le circuit étant conçu comme FPGA.

6. Simulateur de données de capteur pour simuler des données provenant d'un capteur pour tester des unités de commande (8) qui traitent les données simulées, comprenant un système de traitement de données (1) avec au moins une unité de processeur graphique (2), **caractérisé en ce que** le système de traitement de données (1) est agencé pour calculer au moins une partie des données à simuler avec au moins un processeur graphique d'au moins une unité de processeur graphique, à une interface de visualisation (9), en particulier, une unité de conversion de données (6) est connectée à un port DVI ou HDMI, le système de traitement des données (1) étant configuré pour coder des données de capteur simulées en données d'image et pour les sortir via l'interface de visualisation (9) vers l'unité de conversion de données (6), avec laquelle les données reçues peuvent être converties en paquets de données contenant des données de simulation qui peuvent être sorties à une interface réseau (6b), en particulier selon la norme TCP/IP.
